# EUROPÄISCHE PATENTSCHRIFT

(11) **EP 0 931 637 B1**
(45) Veröffentlichungstag und Bekanntmachung des Hinweises auf die Patenterteilung: **19.03.2003**
(21) Anmeldenummer: 98123986.6
(22) Anmeldetag: 17.12.1998
(51) Int. Cl.: B29C 51/16

(54) **Einrichtung und Verfahren zur Herstellung von Behältern und Anbringung von mindestens einem Etikett auf mindestens einigen dieser Behälter**
Device and method for producing containers and attaching of at least one label on at least some of these containers
Dispositif et procédé pour fabriquer des récipients et mettre en place au moins une étiquette sur au moins certains de ces récipients

(30) Priorität: 23.01.1998 FR 9800737
(43) Veröffentlichungstag der Anmeldung: 28.07.1999
(73) Patentinhaber: ERCA FORMSEAL, 91940 Les Ulis Cedex (FR)
(72) Erfinder: Schwab, Dominique, 78000 Versailles (FR)
(74) Vertreter: Intès, Didier Gérard André

(56) Entgegenhaltungen:
- DE-A- 1 704 091
- FR-A- 2 255 154
- FR-A- 2 425 926
- FR-A- 2 528 355
- FR-A- 2 712 838

## Beschreibung

Die vorliegende Erfindung betrifft eine Einrichtung zur Herstellung von Behältern und der Anbringung von mindestens einem Etikett auf mindestens einigen dieser Behälter. Die Vorrichtung enthält einen Formblock, der mindestens eine Verformungs- und Etikettierreihe enthält mit mindestens einer Behälterverformungsund -etikettierkammer, Vorrichtungen zum Transport von so vielen Etikettenstreifen, wie die oben genannte Verformungs- und Etikettierreihe Behälterverformungsund -etikettierkammern enthält, Vorrichtungen, um einen Abschnitt von jedem Etikettenstreifen abzuschneiden und in einer entsprechenden Verformungs- und Etikettierkammer bereitzustellen, sowie Vorrichtungen, um in jeder Verformungskammer des Formblockes einen Behälter zu formen.

Das französische Patent Nr. 2 712 858 beschreibt eine Vorrichtung dieser Art, in der jede Verformungskammer eine Bodenplatte enthält, die so bewegt wird, daß nacheinander der Boden der Kammer verschlossen und anschließend eine Öffnung freigegeben wird, die es erlaubt, ein Etikett in der Kammer bereitzustellen. Die Verformungskammern sind paarweise miteinander verbunden, wobei die jeweiligen Bodenplatten von zwei Kammern desselben Paares sich voneinander wegbewegen beziehungsweise sich einander annähern, um den Boden der Kammern zu verschließen beziehungsweise die Öffnungen zum Bereitstellen der Etiketten freizugeben.

In dieser bekannten Einrichtung muß jeder Etikettenstreifen mit Hilfe von Ablenk- und Umleitungsrollen bis unter eine Verformungskammer bewegt und in dieser Verformungskammer bereitgestellt werden, wenn der Boden der Kammer die entsprechende Öffnung freigibt. Folglich muß die Einrichtung so angepaßt werden, daß direkt unter dem Formblock gleichzeitig sowohl die Vorrichtungen plaziert werden können, die es erlauben, jeden der Etikettenstreifen zu transportieren, als auch die Vorrichtungen, die es erlauben, den Boden der Verformungskammern zu bewegen. Aus diesem Grunde ist die Realisierung dieser Einrichtung ziemlich komplex. Darüber hinaus werden die Etiketten erst dann abgeschnitten, wenn der Endabschnitt eines jeden Etikettenstreifens in eine Verformungskammer eingeführt wird, so daß sich das untere Ende jedes Etikettes zwangsweise bis zum unteren Ende jedes Behälters erstreckt, was wenig Freiheit in Bezug auf die Positionierung des Etikettes und das Aussehen des etikettierten Behälters zuläßt, den man am Ende erhält.

Die vorliegende Erfindung hat zum Ziel, eine Einrichtung vorzustellen, die es erlaubt, zumindest teilweise diese Nachteile zu beheben.

Dieses Ziel wird mittels einer Vorrichtung gemäß Anspruch 1 aufgrund der Tatsache erreicht, daß die Einrichtung Vorrichtungen enthält, die ziemlich senkrechte Wandelemente bilden, wobei sich jedes Wandelement unter eine entsprechende Verformungs- und Etikettierkammer der erwähnten Verformungs- und Etikettierreihe erstreckt, und darüber hinaus Vorrichtungen enthält, die eine Flügelklappe bilden, die so viele Etikettenaufnahmebereiche enthält, wie die Verformungs- und Etikettierreihe Verformungs- und Etikettierkammern enthält, und die in der Lage ist, sich zwischen einer ersten Position, in der die Aufnahmebereiche nach oben gedreht und von den Wandelementen wegbewegt werden, sowie einer zweiten Position zu drehen, in der jeder einzelne der genannten Bereiche gegen ein entsprechendes Wandelement gelegt wird und zusammen mit diesem eine Aufnahmeposition abgrenzt, die dazu dient, ein Etikett für jede Verformungskammer der Verformungs- und Etikettierreihe aufzunehmen, und zwar aufgrund der Tatsache, daß die Vorrichtungen zum Transport der Etikettenstreifen Vorrichtungen enthalten, um einen Endabschnitt jedes Etikettenstreifens in einer Situation auf den entsprechenden Aufnahmebereich zu bringen, in der die Flügelklappe ihre erste Position einnimmt, sowie aufgrund der Tatsache, daß die Schneidevorrichtungen für jeden Streifen ein Schneidewerkzeug enthalten, das in der Lage ist, ein Etikett zu bilden, das auf der Wand eines Behälters befestigt werden kann, indem der Endabschnitt jedes Etikettenstreifens abgeschnitten wird, wenn dieser Endabschnitt auf einem Aufnahmebereich der Flügelklappe liegt, die ihre erste Position einnimmt, des weiteren aufgrund der Tatsache, daß die Flügelklappe Vorrichtungen enthält, um die Etiketten in den Aufnahmebereichen festzuhalten, des weiteren aufgrund der Tatsache, daß der Boden jeder Verformungs- und Etikettierkammer der Verformungs- und Etikettierreihe einen Schlitz aufweist, der mit der Aufnahmeposition in Verbindung steht, die sich zwischen dem entsprechenden Wandelement und dem entsprechenden Aufnahmebereich in der zweiten Position der Flügelklappe befindet, und der sich über und ziemlich genau in der vertikalen Verlängerung dieser Aufnahmeposition erstreckt, sowie aufgrund der Tatsache, daß die Einrichtung Vorrichtungen enthält, um jedes Etikett, das sich in einer Aufnahmeposition in der Verformungsund Etikettierkammer befindet, die zu dieser Aufnahmeposition gehört, durch den Bodenschlitz dieser Kammer zu transportieren.
Die Drehbewegung der Flügelklappe kann leicht mit den Verformungsvorgängen der Behälter synchronisiert werden. Darüber hinaus werden die Etiketten aufgrund dieser Einrichtung zwangsweise durch die Flügelklappe festgehalten, bis sie in der Aufnahmeposition bereitgestellt worden sind, und werden anschließend von den Vorrichtungen festgehalten, die sie von ihrer Aufnahmeposition bis zur entsprechenden Verformungskammer transportieren. Diese Transportvorrichtungen können so angeordnet sein, daß sie die Etiketten in geeigneter Art und Weise in die Warmverformungskammer plazieren, und man kann beispielsweise wählen, daß die Etiketten sich nicht bis zum unteren Ende der Behälter erstrecken sollen. Die Vorrichtungen, die es erlauben, die Flügelklappe und die Transportvorrichtungen zu betätigen, können auf einfache Art und Weise realisiert werden, so daß sie leicht mit dem unter dem Formblock zur Verfügung stehenden Raum auskommen.

Mit dieser Vorrichtung kann man wählen, nur diejenigen Behälter mit einem Etikett zu versehen, die für den Verbraucher sichtbar sind. Der Formblock kann beispielsweise zwei Reihen mit Verformungskammern enthalten, um Behälter herzustellen, die so verpackt werden, daß jede Behältergruppe mindestens einen Behälter enthält, der in jeder Reihe geformt worden ist. Es ist möglich, zu wählen, daß lediglich die Reihe, die am zugänglichsten ist, die "Verformungs- und Etikettierreihe" sein soll, wobei lediglich die in dieser Reihe geformten Behälter mit einem Etikett versehen werden, während die Behälter der anderen Reihe nicht mit Etiketten versehen werden. Daher kann der Hersteller für den Verbraucher eine attraktive Verpackung anbieten und gleichzeitig erhebliche Einsparungen erzielen. Es kann sogar gewählt werden, daß unter den Kammern der Verformungs- und Etikettierreihe lediglich bestimmte Kammern "Verformungs- und Etikettierkammern" sein sollen, während die übrigen lediglich zur Formung dienen.

Es ist jedoch auch möglich, mehrere Kammerreihen in dem Formblock vorzusehen, die gleichzeitig sowohl zur Formung als auch zur Etikettierung dienen. Wenn zum Beispiel der Formblock zwei Reihen enthält, können die Behälter, die in jeder dieser beiden Reihen geformt werden, auf ihren Flächen, die mit der Außenseite zur Verformungsstation zeigen, mit einem Etikett versehen werden. Wenn die Verformungsstation vier Reihen enthält, kann gewählt werden, Etiketten nur auf denjenigen Behältern anzubringen, die in den beiden äußeren Reihen hergestellt werden, und zwar auf der Fläche, die mit der Außenseite zur Verformungsstation zeigt.

Die Einrichtung betrifft vorteilhafterweise die Herstellung von Behältern durch Warmverformung und enthält in dieser Hinsicht Vorrichtungen, um eine Bahn aus thermoplastischem Material schrittweise zu transportieren, sowie Vorrichtungen, um bestimmte Bereiche dieser Bahn vor ihrer Ankunft im Bereich des Formblockes zu erwärmen.

Vorteilhafterweise ist der Formblock vertikal beweglich zwischen einer Verformungsposition und einer Ausformposition. In diesem Fall ist es vorteilhaft, vorzusehen, daß die Wandelemente und die Flügelklappe mit dieser vertikalen Bewegung in Verbindung stehen, daß die Flügelklappe dazu in der Lage ist, ihre erste Position während der Ausformposition des Formblockes einzunehmen, und daß die Transportvorrichtungen für die Etikettenstreifen für jeden Etikettenstreifen eine Zuführfläche aufweisen, die so angeordnet ist, daß sie sich in der Nähe des freien Endes des entsprechenden Aufnahmebereiches der Flügelklappe befindet, wenn diese ihre erste Position und der Formblock seine Ausformposition einnimmt.
Aufgrund dieser Anordnung ist es möglich, Vorteile aus einem Formblock zu ziehen, der vertikal beweglich ist zwischen einer oberen Verformungsposition und seiner unteren Ausformposition, indem die Etikettenstreifen bis zur horizontalen Ebene bewegt werden, in der sich die freien Ende der Aufnahmebereiche befinden, wenn die Form ihre Ausformposition einnimmt. Daher werden die Transportvorrichtungen der Streifen vertikal in einem Abstand von der "Null"-Ebene der Einrichtung angebracht (Transportebene des Materials, worin sich die Behälter befinden), das heißt, daß sie sich in einem Bereich befinden, in dem ein relativ großer freier Raum zur Verfügung steht. Im allgemeinen befindet sich der Formblock unter dem Material, in dem die Behälter geformt werden, während ein Formgegenblock, der Biegestempel enthält, über diesem Material angebracht und vertikal verschiebbar ist, so daß jeder Biegestempel in eine Verformungskammer eindringen kann, um die Behälter zu formen. Die Verformungsposition des Formblockes ist demnach seine untere Position.

Die Erfindung betrifft ebenfalls ein Verfahren zur Herstellung von Behältern und Anbringung von mindestens einem Etikett auf mindestens einigen dieser Behälter. Entsprechend diesem Verfahren wird ein Formblock bereitgestellt, der mindestens eine Verformungs- und Etikettierreihe aufweist, die mindestens eine Behälterverformungs- und -etikettierkammer besitzt, und es werden so viele Etikettenstreifen transportiert, wie die Verformungs- und Etikettierreihe Verformungs- und Etikettierkammern enthält, und in jeder Kammer der erwähnten Reihe wird ein entsprechender Abschnitt eines Etikettenstreifens abgeschnitten und bereitgestellt/angebracht, und in jeder Verformungskammer wird ein Behälter geformt.

Das weiter oben erwähnte französische Patent FR 2 712 858 beschreibt ebenfalls ein Verfahren dieser Art, bei dem die engen Öffnungen im Boden der Verformungskammern (die alle ebenfalls zur Etikettierung dienen) nacheinander freigegeben und wieder geschlossen werden, um die Einführung eines Etikettes und das Abschneiden dieses Etikettes zu ermöglichen. Um dieses bekannte Verfahren umzusetzen, müssen daher die Etikettenstreifen bis unter die Verformungskammern transportiert und die freien Enden dieser Streifen direkt in diese Kammern eingeführt werden, wenn die engen Öffnungen freigegeben werden. Der Transport der Etikettenstreifen ist relativ komplex, und die Etiketten werden vom Rest der Streifen abgeschnitten, sobald sie sich in den Verformungskammern befinden, so daß sie sich im allgemeinen bis zum Boden dieser Kammern erstrecken müssen.

Die Erfindung hat ein Verfahren zum Ziel, bei dem die Anbringung der Etiketten in den Verformungskammern einfacher ist, wobei dieses Verfahren ziemlich frei von den oben erwähnten Nachteilen ist.

Dieses Ziel wird mittels eines Verfahrens gemäß dem unabhängigen Anspruch 11 aufgrund der Tatsache erreicht, daß Vorrichtungen bereitgestellt werden, die Wandelemente darstellen, die ziemlich vertikal verlaufen, wobei sich jedes einzelne unter eine entsprechende Kammer der Verformungs- und Etikettierreihe erstreckt, sowie Vorrichtungen, die eine Flügelklappe bilden, die Aufnahmebereiche aufweist, von denen jeder einzelne mit einer entsprechenden Kammer der Verformungs- und Etikettierreihe in Verbindung steht, des weiteren aufgrund der Tatsache, daß die Flügelklappe gedreht wird, um sie in eine erste Position zu bringen, in der die erwähnten Aufnahmebereiche nach oben zeigen und jeder einzelne dieser Aufnahmebereiche von dem entsprechenden Wandelement wegbewegt wird, daß ein Endabschnitt jedes Etikettenstreifens auf einen entsprechenden Aufnahmebereich gebracht wird, während die Flügelklappe ihre erste Position einnimmt, des weiteren aufgrund der Tatsache, daß der erwähnte Endabschnitt jedes Etikettenstreifens abgeschnitten wird, um Etiketten zu bilden, die in der Lage sind, auf der Wand eines Behälters angebracht zu werden, wobei jedes auf einem Aufnahmebereich der Flügelklappe ruht, die ihre erste Position einnimmt, des weiteren aufgrund der Tatsache, daß die Flügelklappe während des Festhaltens der Etiketten auf den Aufnahmebereichen gedreht wird, um sie in eine zweite Position zu bringen, in der die Aufnahmebereiche gegen die entsprechenden Wandelemente gelegt werden und in der jedes Etikett sich in einer Aufnahmeposition befindet, die zwischen einem Aufnahmebereich und dem entsprechenden Wandelement liegt, des weiteren aufgrund der Tatsache, daß die Etiketten von den Aufnahmepositionen in die entsprechenden Verformungs- und Etikettierkammern transportiert werden, indem jedes Etikett durch einen Verbindungsschlitz geführt wird, der sich im Boden der entsprechenden Verformungs- und Etikettierkammer über der Aufnahmeposition und ziemlich deutlich in der vertikalen Verlängerung dieser Aufnahmeposition befindet.

Die Bereitstellung der Etiketten in den Verformungs- und Etikettierkammern wird vereinfacht, da die Steuerung der Flügelklappe zwischen ihrer ersten und ihrer zweiten Position sowie die Steuerung der Transportvorrichtungen einfache Vorgänge darstellen, die leicht mit den unterschiedlichen Etappen der Formung der Behälter synchronisiert werden können. Darüber hinaus werden die Etiketten zwangsweise in den Aufnahmebereichen der Flügelklappen und anschließend durch Transportvorrichtungen festgehalten, bis sie in den Verformungskammern positioniert werden, so daß eine genaue Positionierung der Etiketten in diesen Kammern gewährleistet werden kann. Es ist ebenfalls anzumerken, daß es ausreichend ist, den Hub der Transportvorrichtungen einzustellen, um die Etiketten in den Verformungskammern auf der gewünschten Höhe zu positionieren, gegebenenfalls geringfügig über dem Boden dieser Kammern.

Vorteilhafterweise werden die Behälter durch Warmverformen aus einer Bahn aus thermoplastischem Material hergestellt, die schrittweise vorwärts bewegt wird.

Entsprechend einer vorteilhaften Herstellungsart wird ein Formblock verwendet, der in der Lage ist, vertikal zwischen einer Verformungsposition der Behälter und einer Ausformposition bewegt zu werden, und die Flügelklappe wird so betätigt, daß sie die erste Position einnimmt, wenn der Formblock seine Ausformposition einnimmt, und die Endabschnitte der Etikettenstreifen werden auf die Aufnahmebereiche der Flügelklappe geführt, und die Abschnitte werden in dieser Situation abgeschnitten, in der sich der Formblock in seiner Ausformposition befindet und die Flügelklappe in ihrer ersten Position steht, und der Formblock wird in seine Verformungsposition gefahren, und die Flügelklappe wird so betätigt, daß sie ihre zweite Position einnimmt, wenn der Formblock sich in seiner Verformungsposition befindet, und in dieser Situation werden die Etiketten in die entsprechenden Verformungskammern transportiert.

Obwohl der Formblock vertikal zwischen seiner Verformungsposition und seiner Ausformposition bewegt wird, ist es aufgrund dieser Anordnung nicht erforderlich, gleichzeitig die Transportvorrichtungen der Etikettenstreifen zu bewegen. Die freien Enden dieser Etikettenstreifen können in die Nähe des Formblockes auf ein konstantes horizontales Niveau gebracht werden, und die Bewegung des Formblockes in seine Ausformposition wird ausgenutzt, um die Endabschnitte der Etikettenstreifen auf die Aufnahmebereiche der Flügelklappe zu plazieren, die sich jetzt in ihrer ersten Position befindet. Die Tatsache, daß die Transportvorrichtungen für die Etikettenstreifen nicht vertikal bewegt werden müssen, vereinfacht die Transportvorgänge erheblich, insbesondere die Steuerungen, die sich auf die Spannung der Etikettenstreifen beziehen.

Die Erfindung wird gut verstanden und ihre Vorteile werden deutlicher, wenn man die nachfolgende ausführliche Beschreibung einer Ausführungsart liest, die hier lediglich als nicht erschöpfendes Beispiel dargestellt wird. Die Beschreibung bezieht sich auf die in der Anlage beigefügten Zeichnungen, auf denen:
- die Abbildung 1 eine allgemeine schematische Ansicht einer Anlage darstellt, die eine Einrichtung entsprechend der Erfindung enthält,
- die Abbildung 2 eine perspektivische schematische Ansicht darstellt, die die Herstellung und den Transport der Etikettenstreifen bis zum Ablegen ihrer Endabschnitter auf den Aufnahmebereichen der Flügelklappe zeigt,
- die Abbildung 3 eine erhöhte schematische Ansicht eines Teils der Einrichtung neben dem Formblock darstellt, die diesen in seiner Verformungsposition sowie die Flügelklappe in ihrer zweiten Position zeigt,
- die Abbildung 4 einen Schnitt entlang der Linie IV-IV der Abbildung 3 darstellt,
- die Abbildung 5 einen Schnitt entsprechend der Abbildung 3 darstellt, die den Formblock in seiner Ausformposition sowie die Flügelklappe in ihrer ersten Position zeigt.

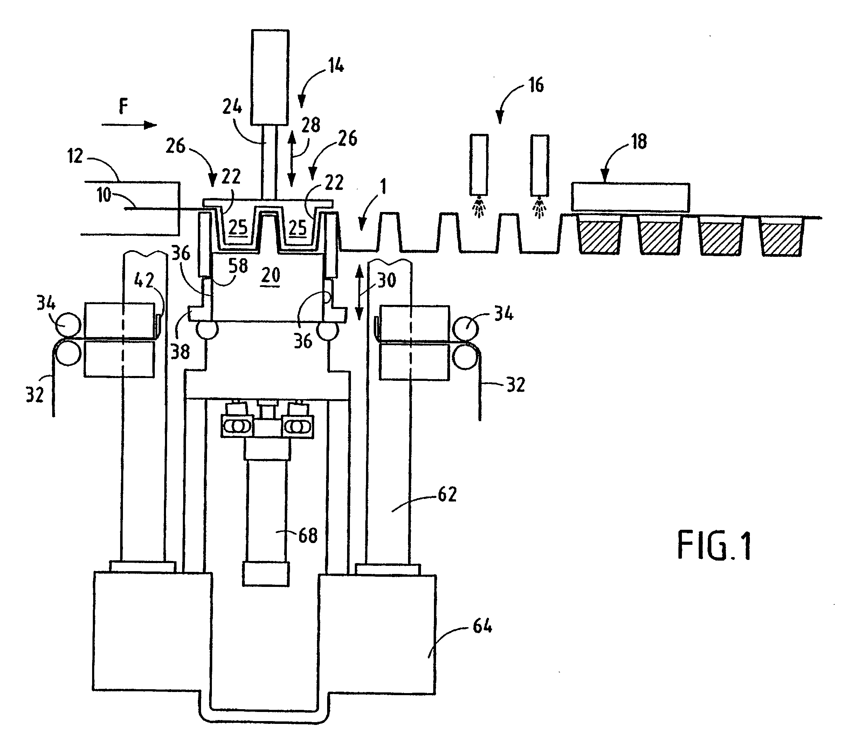

Die in der Abbildung 1 dargestellte Anlage dient dazu, Behälter 1 aus einer Bahn 10 aus thermoplastischem Material warmzuformen, diese Behälter zum Beispiel mit Hilfe eines Lebensmittelproduktes zu befüllen und die befüllten Behälter zu verschließen. Die Anlage enthält Vorrichtungen (nicht dargestellt), um die Bahn 10 schrittweise durch ihre unterschiedlichen Stationen zu transportieren, und zwar im allgemeinen auf horizontale Art und Weise. In der Vorschubrichtung F der Bahn enthält die Anlage eine Wärmequelle 12, die dazu dient, bestimmte Bereiche der Bahn aufzuwärmen, um sie plastisch verformbar zu machen, eine Warmverformungsstation 14 für die Behälter in diesen beheizten Bereichen, eine Station 16 zum Befüllen dieser Behälter sowie eine Station 18 zum Anbringen von Deckeln auf den Öffnungen der Behälter und zum Aufsiegeln dieser Deckel. Unterhalb dieser Station 18 enthält die Anlage im allgemeinen Vorrichtungen, um die Behälter abzuschneiden und sie von der Bahn zu trennen und um sie zu verpacken und zu palettisieren, gegebenenfalls in Gruppen mit mehreren Behältern.

Die Warmverformungsstation enthält einen Formblock 20, der mindestens eine Warmverformungskammer enthält. Im allgemeinen enthält der Formblock mehrere quer angeordnete Reihen zur Warmverformung. Die Einrichtung dieser Erfindung kann so ausgelegt werden, daß nur auf bestimmten in der Warmverformungsstation geformten Behältern Etiketten angebracht werden. Aus diesem Grunde wird im folgenden der Begriff "Verformungs- und Etikettierreihe" für die Warmverformungskammerreihe(n) verwendet, bei der bzw. bei denen die in diesen Kammern geformten Behälter mit einem Etikett versehen werden. Zur Vereinfachung wir im übrigen davon ausgegangen, daß alle Kammern dieser Reihe(n) "Verformungs- und Etikettierkammer" sind.

In dem dargestellten Beispiel enthält der Formblock 20 zwei Kammerreihen 22, die beide Verformungs- und Etikettierreihen 26 sind. Man könnte sich aber auch vorstellen, daß lediglich eine dieser Reihen gleichzeitig sowohl zur Formung als auch zur Etikettierung von Behältern dient, während die andere Reihe ausschließlich zur Formung dienen würde. Man könnte sich ebenfalls vorstellen, daß der Formblock weitere Reihen enthält, von denen bestimmte Reihen (im allgemeinen die äusseren Reihen, die sich unterhalb beziehungsweise oberhalb des Formblocks in der Vorschubrichtung F der Bahn befinden) Verformungs- und Etikettierreihen sind, während andere (im allgemeinen die inneren Reihen, die sich zwischen den äußeren Reihen befinden) ausschließlich zur Formung der Behälter dienen würden.

Die Warmverformungsstation enthält ebenfalls einen Formgegenblock 24, der so viele Warmverformungskolben 25 enthält, wie der Formblock Warmverformungskammern 22 enthält, wobei jeder Kolben dazu bestimmt ist, in eine Kammer einzudringen, um einen Behälter warmzuverformen. Wie der Doppelpfeil 28 darstellt, sind die Kolben des Formgegenblocks vertikal verschiebbar, um abwechselnd in die Kammern zwecks Warmverformung einzudringen und sich von der Bahn wieder zu entfernen, um deren Vorschub zu ermöglichen. Wie durch den Doppelpfeil 30 dargestellt, ist der Formblock 20 ebenfalls vertikal verschiebbar, und zwar zwischen einer Warmverformungsposition, wie in der Abbildung 1 dargestellt, und einer Ausformposition, in der er von der Bahn 10 wieder entfernt wird, um deren Vorschub zu ermöglichen. Im allgemeinen befindet sich der Formblock unter der Bahn 10, so daß seine Verformungs- und Ausformposition seiner oberen beziehungsweise seiner unteren Position entspricht.

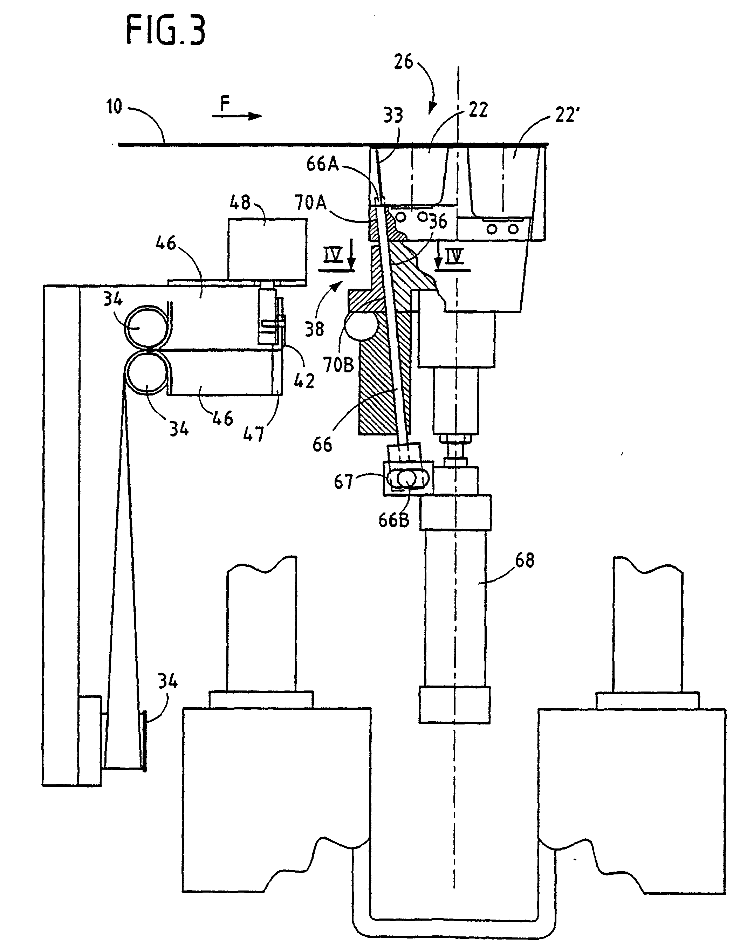

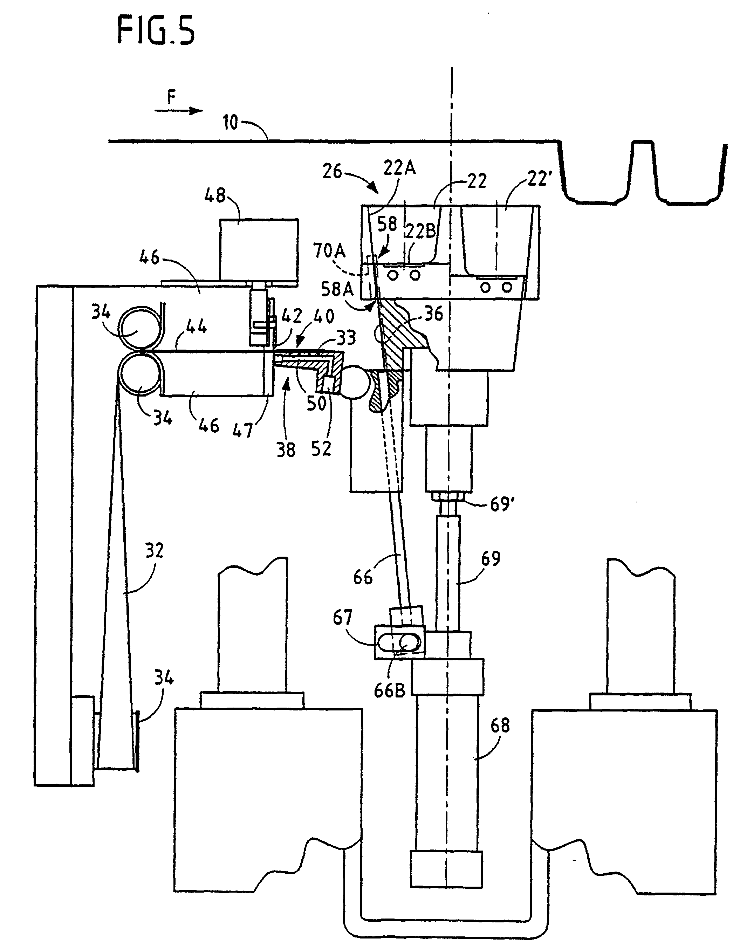

Die Einrichtung enthält Vorrichtungen, um so viele Etikettenstreifen 32 zu transportieren, wie die Verformungs- und Etikettierreihe(n) Kammern 22 enthält/enthalten. Diese Transportvorrichtungen enthalten in an sich bekannter Art und Weise Ablenk- und Umleitungsrollen, die sequentiell synchron mit den Verformungsvorgängen der Behälter angetrieben werden. Diese Rollen sind durch die Referenz 34 auf den Abbildungen 1, 3 und 5 gekennzeichnet. Um die Darstellung zu vereinfachen, ist auf den Abbildungen 3 und 5 davon ausgegangen worden, daß lediglich die auf der Vorderseite liegende Reihe eine Verformungs- und Etikettierreihe 26 ist.

Die Einrichtung enthält Vorrichtungen, die ziemlich vertikale Wandelemente 36 bilden, wobei sich jedes Wandelement unter eine entsprechende Kammer der Verformungs- und Etikettierreihe erstreckt. Wie auf den Abbildungen 3 und 5 zu sehen ist, können die Wandelemente 36 in Bezug auf die Vertikale leicht geneigt sein, um ziemlich parallel zur Vertikalen (22A) der seitlichen Wände der Warmverformungskammer 22 angeordnet zu werden, gegen die die Etiketten angebracht werden. Für jede Kammer 22 ist das Wandelement 36 in Bezug auf die Wand 22A leicht versetzt, damit ein Schlitz 58 im Boden dieser Kammer vorgesehen werden kann, wobei sich eine Kante dieses Schlitzes in der direkten Verlängerung der Wand 22A der Kammer befindet, während sich die andere Kante in der Verlängerung des Wandelementes 36 befindet. Die Einrichtung enthält ebenfalls Vorrichtungen, die eine Flügelklappe 38 bilden, die so viele Etikettenaufnahmebereiche 40 enthält, wie die Verformungs- und Etikettierreihe 26 Kammern 22 enthält. Diese Flügelklappe 38 dreht sich zwischen einer ersten Position, die in der Abbildung 5 dargestellt ist, und einer zweiten Position, die in der Abbildung 3 dargestellt ist.

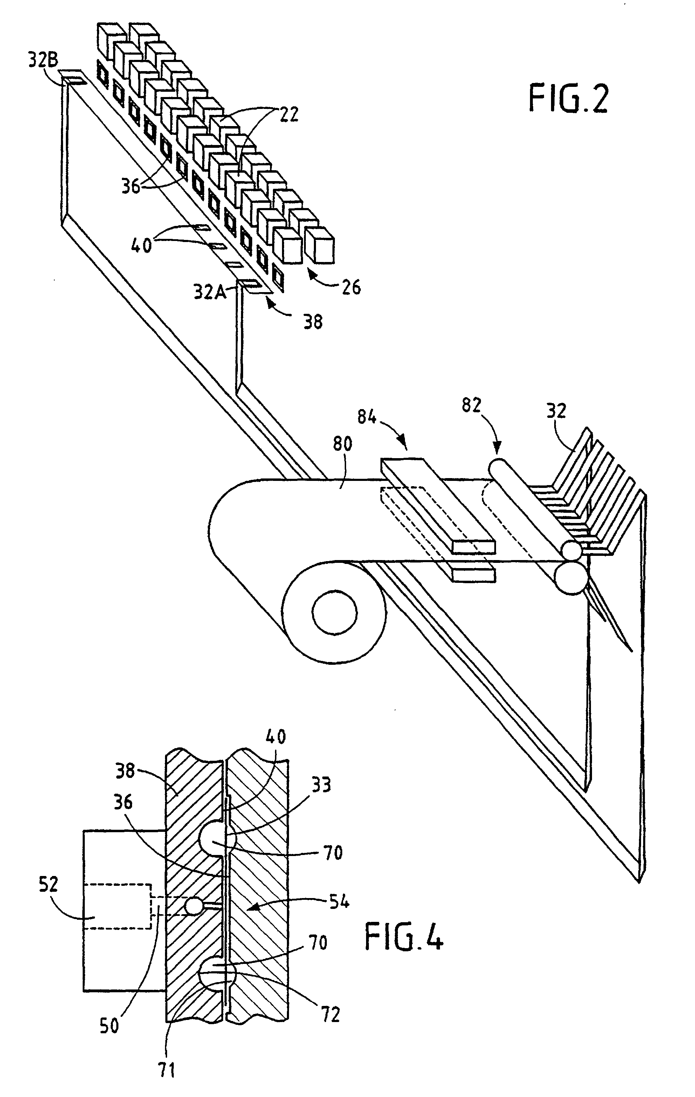

Bei Betrachtung der Abbildung 2 versteht man die Anordnung der Wandelemente und der Aufnahmebereiche der Vorrichtungen besser, die die Flügelklappe bilden. Auf der Abbildung 2 ist daher wie auf den Abbildungen 3 und 5 davon ausgegangen worden, daß lediglich die auf der Vorderseite befindliche Reihe eine Verformungs- und Etikettierreihe 26 ist. Unter jeder Kammer 22 dieser Reihe ist ein Wandelement 36 angeordnet. Diese Wandelemente 36 können selbstverständlich aus unterschiedlichen Bereichen einer selben durchgehenden Wand gebildet werden, die zu jeder einzelnen Kammer gehören, oder aber aus unterschiedlichen Wandelementen bestehen, die voneinander getrennt sind.

Jede Gruppe aus einer Kammer 22 und dem entsprechenden Wandelement 36 ist mit einem Aufnahmebereich 40 der Vorrichtungen verbunden, die die Flügelklappe 38 bilden. Die Aufnahmebereiche 40 sind so angeordnet, daß sie während der Drehung der Flügelklappe um eine horizontale Achse gegen die Wandelemente 36 gelegt werden, wobei die Achse querliegend zur Vorschubrichtung der Bahn angeordnet ist, aus der die Behälter geformt werden. Die Aufnahmebereiche können aus unterschiedlichen Bereichen der selben durchgehenden Flügelklappe bestehen, oder jeder einzelne Aufnahmebereich kann auf einer eigenen Flügelklappe angeordnet sein, wobei in diesem Fall die unterschiedlichen Flügelklappen, die die Vorrichtungen 38 bilden, simultan gesteuert werden.

In der Situation, die auf den Abbildungen 2 und 5 dargestellt ist, nimmt die Flügelklappe 38 ihre erste Position ein, so daß die Endabschnitte der Etikettenstreifen 32 (wie bei den Streifenenden 32A und 32B der Abbildung 2 zu sehen ist) auf die Aufnahmebereiche 40 plaziert werden können. Die Einrichtung enthält ebenfalls Abschneidevorrichtungen, die die Endabschnitte der Etikettenstreifen 32 abschneiden, um die Etiketten zu formen. Genauer gesagt enthalten die Abschneidevorrichtungen für jede Gruppe einer Kammer 22 der Verformungs- und Etikettierreihe, eines Wandelementes 38 sowie eines entsprechenden Aufnahmebereiches ein Schneidewerkzeug 42, das in der Lage ist, den Endabschnitt des Etikettenstreifens 32 abzuschneiden, der zu der betreffenden Gruppe gehört, sobald dieser Endabschnitt auf dem Aufnahmebereich der Flügelklappe 38 in ihrer ersten Position ruht.

Im allgemeinen werden die Etikettenstreifen bis auf die Empfangsbereiche 40 der Flügelklappe transportiert, wobei sie durch die Führungsschlitze 44 laufen, die zwischen den Führungsvorrichtungen 46 angeordnet sind. Die Schneidemesser 42 befinden sich am freien Ende dieser Führungsvorrichtungen, wobei dieses freie Ende direkt neben dem freien Ende der Empfangsbereiche 40 liegt, wenn die Flügelklappe ihre erste Position einnimmt. Im allgemeinen ist das Schneidemesser 42 auf einer der Führungsvorrichtungen 46 angebracht (zum Beispiel der oberen Führungsvorrichtung) und kann vertikal mit Hilfe von Verschiebesteuervorrichtungen 48 (zum Beispiel mit einem pneumatischen Zylinder) bewegt werden, während das freie Ende 47 der anderen Führungsvorrichtung die Rolle des Gegenmessers übernimmt. Sobald die Endabschnitte der Etikettenstreifen von den Schneidemessern 42 abgeschnittenen worden sind, erhält man Etiketten 33, von denen jedes einzelne auf einem Aufnahmebereich 40 der Flügelklappe 38 liegt. Dementsprechend stellt die Abbildung 5 die Situation der Einrichtung dar, während das Schneidemesser 42 angehoben wird, nachdem es das Etikett 33 abgeschnitten hat, das im Bereich 40 liegt, und vor der Bewegung der Flügelklappe 38, um sie in ihre zweite Position zu bringen.

Um zu verhindern, daß sich die Etiketten 33 während der Drehung der Flügelklappe in ihre zweite Position auf diese Flügelklappe 38 verschieben, enthält sie Vorrichtungen, um die Etiketten auf den Aufnahmebereichen 40 festzuhalten. Zu diesem Zweck können zum Beispiel Luftansaugvorrichtungen verwendet werden. Wie in der Abbildung 5 dargestellt ist, kann die Flügelklappe daher Luftansaugkanäle 50 enthalten, die in die Aufnahmebereiche 40 münden. Zur Vereinfachung sind die Kanäle 50 sowie deren Verbindungsbereiche 52 mit einer hier nicht dargestellten Luftansaugquelle schematisch dargestellt. Wie im Schnitt der Abbildung 4 zu erkennen ist, befindet sich eine Aufnahmeposition 54 zwischen jedem Aufnahmebereich 40 und dem entsprechenden Wandelement 36, wenn sich die Flügelklappe 38 dreht, um ihre zweite Position einzunehmen, wobei diese Aufnahmeposition ein Etikett 33 enthält.

Wie weiter oben bereits erwähnt wurde, weist der Boden 22B jeder Verformungskammer 22 der Verformungs- und Etikettierreihe einen Schlitz 58 auf, dessen Kanten, die quer zur Vorschubrichtung der Bahn 10 ausgerichtet sind, mit dem entsprechenden Wandelement 36 sowie dem entsprechenden Aufnahmebereich 40 in der Lage ausgerichtet ist, die dieser Aufnahmebereich in der zweiten Position der Flügelklappe 38 einnimmt. Daher hat jeder Schlitz 58 eine Verbindung mit der entsprechenden Aufnahmeposition 54. Die Schlitze 58 erstrecken sich ziemlich genau in der vertikalen Verlängerung der Aufnahmeposition 54. Genauer gesagt konnte man bereits erkennen, daß die Wandelemente 36 leicht geneigt sein konnten, so daß die Ebene der Aufnahmeposition 54 selbst leicht geneigt ist. Daher ist zu berücksichtigen, daß die mittlere Ebene der Schlitze 58 allgemein die gleiche ist, wie die Ebene bei den Aufnahmepositionen 54. Dadurch ist es möglich, diejenigen Etiketten 33 in die Kammern 22 einzubringen, die zunächst in den Aufnahmepositionen 54 enthalten waren, indem diese Etiketten durch eine einfache Transportbewegung nach vorne geschoben werden.

Wie weiter oben bereits erwähnt wurde, kann der Formblick 22 vertikal zwischen einer oberen Verformungsposition und einer unteren Ausformposition bewegt werden. Der Formblock ist in der Tat mit einem Rahmengestell verbunden, wobei dieses Rahmengestell vertikal verschiebbar ist, indem es bei seiner Bewegung von Führungssäulen 62 geführt wird, die auf einer festen Stütze (nicht dargestellt) angebracht sind. Die Vorrichtungen zur Verschiebung des Rahmengestells enthalten zum Beispiel Nocken (nicht dargestellt), deren Steuerung mit den Vorgängen zur Formung der Behälter und dem Vorschub der Bahn 10 synchronisiert ist.

Wie auf den Abbildungen ersichtlich ist, sind die Wandelemente 36 sowie die Flügelklappen 38 mit dem Rahmengestell 64 verbunden und können daher vertikal zusammen mit dem Formblock 20 bewegt werden. Die Zuführebene der Endabschnitte der Etikettenstreifen 32, die durch die Position der Führungsschlitze 44 bestimmt wird, entspricht daher der Ebene, die die Aufnahmebereiche 40 einnehmen, wenn die Flügelklappe sich in ihrer ersten Position befindet und der Formblock seine Ausformposition einnimmt.

Die Etikettentransportvorrichtungen sind ihrerseits in Bezug auf den Formblock beweglich, so daß sie das Bereitstellen der Etiketten 33 in den Aufnahmepositionen 54 ermöglichen, wenn die Flügelklappe sich gedreht hat.

Die Verschiebevorrichtungen dieser Transportvorrichtungen werden so gesteuert, daß sie diese Aufnahmepositionen freigeben, während der Formblock 20 seine Ausformposition einnimmt. Daher sind die Transportelemente 66 mit dem beweglichen Teil eines Kolbens 68 verbunden, der unter dem Formblock 20 montiert ist. In der Position, die auf den Abbildungen 1 und 5 dargestellt ist, nimmt dieser bewegliche Teil des Kolbens 68 seine untere Position ein, so daß sich die oberen Enden der Transportelemente 66 in der Nähe des unteren Endes der Aufnahmepositionen 54 befinden. Sobald die Etiketten 33 abgeschnitten worden sind und in den Aufnahmebereichen 40 zur Verfügung stehen, wird die Flügelklappe 38 betätigt, so daß die Etiketten in die Aufnahmepositionen 54 plaziert werden. Nur in dieser Lage werden die beweglichen Teile der Kolben 68 betätigt, um die Transportelemente 66 zu bewegen und die Etiketten 33 durch die Schlitze 58 in die Warmverformungskammern zu bringen.

Wie man beim Betrachten der Abbildung 4 besser versteht, enthalten die Transportelemente für jede Kammer 22 der Verformungs- und Etikettierreihe zwei Transportfinger 66, die entsprechend der Länge des Schlitzes 58, der zu dieser Kammer gehört, von einander entfernt angebracht sind, das heißt entsprechend der Länge der Aufnahmeposition 54, gemessen quer zur Richtung des Vorschubs der Bahn 10. Jeder Finger ist in der Lage, in einem ziemlich vertikalen Kanal 70 zu gleiten, der sich von einem Bereich des zur betreffenden Kammer 22 gehörenden Wandelementes 36, der vom Boden dieser Kammer entfernt ist, bis zumindest dem Schlitz 58 erstreckt, der sich im Boden dieser Kammer befindet. Wie in den Abbildungen 3 und 5 besser zu sehen ist, enthalten die Kanäle 70 demzufolge einen oberen Abschnitt 70A, der im Boden des Formblocks angebracht ist und der sich für jede Kammer 22 mindestens genau auf die Höhe des Schlitzes 58 im Boden dieser Kammer erstreckt, sowie einen unteren Abschnitt 70B, der gebildet wird, wenn die Flügelklappe 38 ihre zweite Position einnimmt, in der die Aufnahmebereiche 40 gegen die entsprechenden Wandelemente 36 gelegt sind.

Die Kanäle 70 haben im allgemeinen eine ziemlich genaue zylindrische Form und werden demzufolge zum einen Teil durch die Verstärkungen 71 in Form eines Zylinderabschnittes gebildet, die sich in den Wandelementen 36 befinden, und zum übrigen Teil durch Verstärkungen 72 in Form eines zusätzlichen Zylinderabschnittes, die sich in den Aufnahmebereichen der Flügelklappe 38 befinden. Diese Kanäle 70 erstrecken sich demzufolge bei Betrachtung in Richtung des Vorschubs der thermoplastischen Bahn über beide Seiten der Schlitze 58, so daß die Etiketten 33, die in den Aufnahmepositionen 54 enthalten sind und in die Verformungskammern 22 transportiert werden, auf den freien Enden 66A der Transportfinger 66 ruhen können.

Wie auf der Abbildung 5 zu erkennen ist, sind die Verbindungsbereiche der Schlitze 58 in den Aufnahmepositionen 54 (die unteren Enden 58A dieser Schlitze 58) vorteilhafterweise geringfügig vergrößert, so daß das Einführen der Etiketten in diese Schlitze erleichtert wird. Sobald die Etiketten gegen die Wände 22A der Kammern 22 gelegt sind, können die Behälter auf klassische Art und Weise warmverformt werden.

Ausgehend von der in der Abbildung 5 darstellten Situation kann gewählt werden, damit zu beginnen, die Flügelklappe 38 zu drehen und anschließend die Bewegung der Transportfinger 66 zu steuern, um die Etiketten gegen die Wände 22A der Kammern zu legen, bevor das gesamte Rahmengestell 64 angehoben wird, um den Formblock 20 in die Verformungsposition zu bringen. Um Zeit zu gewinnen, kann gewählt werden, die Flügelklappe 38 zu drehen und den Transport der Etiketten vorzunehmen, indem die Transportfinger 66 bewegt werden, während gleichzeitig mit dem Anheben des Formblocks 20 begonnen wird, so daß die Etiketten genau zum selben Zeitpunkt ihre Position in den Verformungskammern einnehmen, zu dem der Formblock 20 seine Verformungsposition erreicht.

Wie auf der Abbildung 5 zu erkennen ist, befinden sich die freien Enden der Kanäle 70, die in die Verformungskammern münden, vorteilhafterweise geringfügig oberhalb des Bodens 22B dieser Kammern, um eine Positionierung der Etiketten geringfügig über dem unteren Ende der Behälter zu erlauben, was mehr Freiheit in Bezug auf den letztendlichen ästhetischen Aspekt der etikettierten Behälter zuläßt.

Die Kammern 22 werden vorteilhafterweise mit Vorrichtungen versehen, um die Etiketten 33 angesichts der Warmverformung der Behälter und ihrer "Aufformung" auf die Etiketten gegen ihre Wände 22A zu halten. Diese Vorrichtungen können zum Beispiel ein Luftansaugsystem enthalten, das über Kanäle verfügt, die in jede der Kammern 22 der Verformungs- und Etikettierreihe münden (auf ihren Wänden 22A).

Diese Vorrichtungen zum Festhalten der Etiketten können sich damit begnügen, sie gegen die Wände 22A zu legen. Sie können auch stark genug sein, um die vertikale Plazierung der Etiketten zu gewährleisten, so daß die Finger 66 angesichts der "Aufformung" der Behälter auf die Etiketten zurückgefahren werden können, und so daß keine Spur dieser Finger auf den Behältern sichtbar ist. Es kann aber auch vorgesehen werden, daß die Finger die Etiketten während der Warmverformung des Behälters weiterhin in den Kammern halten, wobei ihre oberen Enden in diesem Fall geringfügig in diese Kammern hinein reichen können und wenig sichtbare Abdrücke im Bereich des unteren Endes der Behälter hinterlassen.

Wie bereits weiter oben erwähnt wurde, müssen die seitlichen Wände der Behälter nicht genau vertikal sein. Aus diesem Grunde wurde in der vorliegenden Beschreibung darauf hingewiesen, daß die Wandelemente 36 "ziemlich" senkrecht sind. Wenn wie in dem hier dargestellten Beispiel die Wandelemente sowie die Transportfinger geringfügig in Bezug zur Vertikalen geneigt sind und wenn die beweglichen Teile der Kolben 68 in einer vertikalen Richtung beweglich sind, kann es erforderlich sein, vorzusehen, daß die unteren Enden 66B der Transportfinger in den Führungsöffnungen 67 beweglich sind, um in jeder Position in der Achse der Kanäle 70 zu bleiben, die in Bezug auf die Vertikale geringfügig geneigt sind.

Auf den Abbildungen 3 und 5 ist festzustellen, daß auf der linken Reihe des Formblocks Kammern 22 mit einer Tiefe dargestellt sind, die unter der Tiefe der Kammern 22' der rechten Reihe liegt. Es ist offensichtlich, daß während ein und der selben Einsatzfolge der Einrichtung eher Behälter warmverformt werden, die alle die gleiche Tiefe aufweisen, indem Kammern verwendet werden, die selbst auch die gleiche Tiefe aufweisen. Auf den Abbildungen 3 und 5 sollte daher dadurch, daß den Kammern 22' eine unterschiedliche Tiefe verliehen wurde, lediglich gezeigt werden, daß es möglich ist, bestimmte Teile des Formblocks (im allgemeinen den Boden der Warmverformungskammer) zu ändern, um mit der selben Anlage Behälter mit unterschiedlicher Tiefe warmzuverformen. In diesem Fall enthält die Einrichtung vorteilhafterweise Vorrichtungen, die es erlauben, die Strecke der Transportfinger 66 entsprechend der Tiefe der Verformungskammern zu steuern. Zu diesem Zweck können die festen Stangen 69 der Kolben, die die Finger 66 betätigen, durch ein teleskopisches System in der Länge geregelt werden, das durch Muttern 69' oder durch einen zweiten Kolben eingestellt wird, der am Ende der Stangen 69 befestigt ist.

Mit der soeben beschriebenen Einrichtung kann gewählt werden, lediglich die Teile der Behälter mit einem Etikett zu versehen, die sichtbar sind, während diese verpackt sind, und zum Beispiel lediglich bestimmte Behälter mit einem Etikett zu versehen. In bestimmten Fällen, und insbesondere, wenn Behälter warmverformt werden, deren Abmessungen in Längsrichtung der thermoplastischen Bahn groß sind, kann jedoch gewünscht werden, die Wände sowohl auf der Vorderseite als auch auf der Rückseite dieser Behälter mit einem Etikett zu versehen. In diesem Fall kann durch Verwendung von Warmverformungskammern, die in einer einzigen Reihe angeordnet sind, der Boden einer jeden Kammer mit zwei Schlitzen ausgestattet werden, die sich jeweils auf der Wandseite, die auf der Vorderseite dieser Kammern liegt, sowie auf der Wandseite, die auf der Rückseite dieser Kammern liegt, befinden, und es können - wie weiter oben beschrieben - zwei Etiketten in jeder Kammer zur Verfügung gestellt werden, und zwar jeweils gegen die auf der Vorderseite liegende Wand und gegen die auf der Rückseite liegende Wand.

In der Abbildung 2 ist zu erkennen, daß die Etikettenstreifen vorteilhafterweise aus einer Etikettenbahn 80 hergestellt werden können, die in Abständen quer zur thermoplastischen Bahn 10 angeordnet ist und die schrittweise durch entsprechende Vorrichtungen transportiert wird. Auf der Strecke dieser Etikettenbahn 80 befinden sich Schneidevorrichtungen, die zum Beispiel aus Rollen 82 bestehen, die mit Schneidescheiben ausgestattet sind, die in regelmäßigen Abständen angeordnet sind und die Etikettenstreifen 32 herstellen, indem die Etikettenbahn 80 in Längsrichtung geschnitten wird. Anschließend wird jeder Etikettenstreifen 32 separat weiter transportiert, bis er den entsprechenden Führungsschlitz 44 erreicht. Um zu verhindern, daß sich die unterschiedlichen Etikettenstreifen gegenseitig behindern, wird vorzugsweise gewählt, zwei benachbarte Etikettenstreifen hinter den Schneidewalzen 82 jeweils nach oben und nach unten zu leiten.

Wenn gewünscht wird, den Etiketten eine besondere Form zu verleihen, können Vorrichtungen vorgesehen werden, um in der Etikettenbahn Schnitte vorzunehmen, die teilweise den Umriß eines jeden Etikettes darstellen. Auf diese Art und Weise kann eine Vorschneidestation 84 vor den Schneidewalzen 82 angebracht werden, wobei diese Station bei jedem Schritt eine Stanzung der Etikettenbahn 80 vornimmt, um in dieser Bahn Schnitte vorzunehmen, die zum Beispiel darauf abzielen, die Ecken der Etiketten abzurunden.

Die Flügelklappe 38 kann mit Hilfe aller geeigneten Vorrichtungen betätigt werden, zum Beispiel mit pneumatischen Kolben oder einem Nockensystem, dessen Konfiguration so ausgelegt ist, daß die Bewegungen der Flügelklappe mit den Vorgängen zur Warmverformung der Behälter synchronisiert werden.

Nach der Bereitstellung der Etiketten in den Verformungs- und Etikettierkammern werden die Behälter in diesen Kammern geformt, und diejenigen Wände der Behälter, die dazu bestimmt sind, werden gegen die Etiketten gedrückt. Die Etiketten können durch alle geeigneten Vorrichtungen auf den Wänden der Behälter angebracht werden, zum Beispiel durch Aufkleben. Insbesondere wenn die Behälter durch Warmverformung hergestellt werden, werden vorteilhafterweise Etiketten verwendet, die zuvor mit einer warmklebenden Substanz auf derjenigen Fläche beschichtet worden sind, die dazu bestimmt ist, mit der Wand eines Behälters zusammenzuwirken, und die Etiketten werden mit den Behältern unter der Wirkung der Wärme verbunden, die der Bahn aus thermoplastischem Material 10 zur Warmverformung der Behälter zugeführt wird.

Wenn die Etikettenstreifen durch Abschneiden von der Etikettenbahn 80 hergestellt werden, wird in diesem Fall vorteilhafterweise eine Etikettenbahn 80 verwendet, bei der eine der Flächen, die dazu bestimmt ist, die hintere Fläche der Etiketten zu bilden, welche mit den Behältern zusammenwirkt, zuvor mit einer warmhaftenden Substanz überzogen wird.

## Patentansprüche

1. Einrichtung zur Herstellung von Behältern (1) und zur Anbringung von mindestens einem Etikett auf mindesten einigen der Behältern, wobei die Einrichtung einen Formblock (20) enthält, der mindestens eine Verformungs- und Etikettierreihe (26) enthält, die mindestens eine Kammer (22) zur Verformung und Etikettierung von Behältern besitzt, Vorrichtungen (34, 44), um so viele Etikettenstreifen (32) zu transportieren, wie diese Verformungs- und Etikettierreihe (26) Kammern (22) zum Formen und Etikettieren von Behältern enthält, Vorrichtungen zum Abschneiden und Anbringen eines Abschnittes eines jeden Etikettenstreifens in einer entsprechenden Verformungs- und Etikettierkammer sowie Vorrichtungen (14), um einen Behälter (1) in jeder Verformungskammer (22) des Formblocks (20) zu formen,
**dadurch gekennzeichnet, daß** die Einrichtung Vorrichtungen enthält, die ziemlich senkrechte Wandelemente (36) bilden, wobei sich jedes Wandelement unter eine entsprechende Verformungs- und Etikettierkammer (22) der oben erwähnten Verformungs- und Etikettierreihe (26) erstreckt, sowie Vorrichtungen, die eine Flügelklappe (38) bilden, die so viele Bereiche (40) zur Aufnahme von Etiketten aufweist, wie die Verformungs- und Etikettierreihe 826) Verformungs- und Etikettierkammern (22) enthält und die in der Lage ist, sich zwischen einer ersten Position zu drehen, in der die Aufnahmebereiche (40) nach oben zeigen und von den Wandelementen (36) entfernt sind, und einer zweiten Position, in der jeder der genannten Bereiche (40) gegen ein entsprechendes Wandelement (36) gelegt wird und zusammen mit diesem eine Aufnahmeposition (54) bildet, die in der Lage ist, ein Etikett (33) für jede Verformungs- und Etikettierkammer (22) der Verformungs- und Etikettierreihe (26) aufzunehmen, und **dadurch gekennzeichnet, daß** die Vorrichtungen zum Transport der Etikettenstreifen (32) Vorrichtungen enthalten, um einen Endabschnitt eines jeden Etikettenstreifens zu dem entsprechenden Aufnahmebereich (40) in einer Lage zu bringen, in der die Flügelklappe (38) ihre erste Position einnimmt, und **dadurch gekennzeichnet, daß** die Abschneidevorrichtungen für jeden Etikettenstreifen ein Schneidewerkzeug (42) enthalten, das in der Lage ist, ein Etikett (33) zu bilden, das auf der Wand eines Behälters (1) angebracht werden kann, indem der Endabschnitt eines jeden Etikettenstreifens (32) abgeschnitten wird, wenn dieser Endabschnitt auf einem Aufnahmebereich (40) der Flügelklappe (38) liegt, die ihre erste Position einnimmt, und **dadurch gekennzeichnet, daß** die Flügelklappe Vorrichtungen (50, 52) enthält, um die Etiketten (33) auf den Aufnahmebereichen (40) festzuhalten, und **dadurch gekennzeichnet, daß** der Boden (22B) einer jeden Verformungs- und Etikettierkammer (22) der Verformungs- und Etikettierreihe (26) einen Schlitz (58) aufweist, der mit der Aufnahmeposition (54) in Verbindung steht, die sich zwischen dem entsprechenden Wandelement (36) und dem entsprechenden Aufnahmebereich (40) in der zweiten Position der Flügelklappe (38) befindet, und der sich über und ziemlich genau in der vertikalen Verlängerung dieser Aufnahmeposition (54) erstreckt, und **dadurch gekennzeichnet, daß** die Einrichtung Vorrichtungen enthält, um jedes Etikett (33), das sich in einer Aufnahmeposition (54) befindet, in die Verformungs- und Etikettierkammer (22) zu transportieren, zu der diese Aufnahmeposition gehört, und zwar über den Schlitz (58) im Boden (22B) dieser Kammer.

2. Einrichtung entsprechend dem Anspruch 1, **dadurch gekennzeichnet, daß** sie Vorrichtungen zum schrittweisen Transport einer Bahn aus thermoplastischem Material (10) sowie Vorrichtungen (12) enthält, um bestimmte Bereiche diese Bahn vor ihrer Ankunft im Bereich des Formblockes (20) zu erwärmen.

3. Einrichtung entsprechend dem Anspruch 1 oder 2, **dadurch gekennzeichnet, daß** der Formblock (20) vertikal zwischen einer Verformungsposition und einer Ausformposition beweglich ist, weiterhin **dadurch gekennzeichnet, daß** die Wandelemente (36) sowie die Flügelklappe (38) mit dieser vertikalen Bewegung verbunden sind, weiterhin **dadurch gekennzeichnet, daß** die Flügelklappe (38) in der Lage ist, ihre erste Position in der Ausformposition des Formblockes (20) einzunehmen, sowie **dadurch gekennzeichnet, daß** die Transportvorrichtungen (34, 44) der Etikettenstreifen (32) für jeden Etikettenstreifen eine Zuführfläche (44) aufweisen, die so angeordnet ist, daß sie sich neben dem freien Ende des entsprechenden Aufnahmebereiches (40) der Flügelklappe (38) befindet, wenn diese ihre erste Position und der Formblock (20) seine Ausformposition einnimmt.

4. Einrichtung entsprechend einem beliebigen der Ansprüche 1 bis 3, **dadurch gekennzeichnet, daß** die Vorrichtungen zum Festhalten der Etiketten (33) auf den Aufnahmebereichen (40) der Flügelklappe ein Luftansaugsystem enthalten, das über Kanäle (50) verfügt, die in jeden Aufnahmebereich (40) münden.

5. Einrichtung entsprechend einem beliebigen der Ansprüche 1 bis 4, **dadurch gekennzeichnet, daß** jede Verformungs- und Etikettierkammer (22) der Verformungsund Etikettierreihe (26) Vorrichtungen enthält, um ein Etikett (33) gegen eine ziemlich vertikale Wand (22A) jeder der erwähnten Kammern (22) zu halten.

6. Einrichtung entsprechend dem Anspruch 5, **dadurch gekennzeichnet, daß** sie ein Luftansaugsystem enthält, das über Kanäle verfügt, die in jede der Verformungsund Etikettierkammern (22) der Verformungs- und Etikettierreihe (26) münden.

7. Einrichtung entsprechend einem beliebigen der Ansprüche 1 bis 6, **dadurch gekennzeichnet, daß** sie für jede Verformungs- und Etikettierkammer (22) der Verformungs- und Etikettierreihe (26) zwei Transportfinger (66) enthält, die in einem Abstand entsprechend der Länge des Schlitzes (58) voneinander entfernt sind, der sich im Boden (22B) der betreffenden Kammer befindet, wobei jeder dieser Finger dazu geeignet ist, in einem ziemlich vertikalen Kanal (70) zu gleiten, der sich von einem Bereich des zur betreffenden Kammer gehörenden Wandelementes (36), das vom Boden dieser Kammer entfernt ist, bis mindestens zum Schlitz (58) erstreckt, der im Boden dieser Verformungs- und Etikettierkammer (22) angeordnet ist.

8. Einrichtung entsprechend dem Anspruch 7, **dadurch gekennzeichnet, daß** sie Vorrichtungen (69') enthält, um die Strecke der Transportfinger (66) entsprechend der Tiefe der Verformungs- und Etikettierkammern (22, 22') der Verformungs- und Etikettierreihe (26) zu steuern.

9. Einrichtung entsprechend einem beliebigen der Ansprüche 1 bis 8, **dadurch gekennzeichnet, daß** sie Vorrichtungen (82) enthält, um eine Etikettenbahn (80) in Längsrichtung so zu schneiden, daß die Etikettenstreifen (32) auf dieser Etikettenbahn gebildet werden.

10. Einrichtung entsprechend dem Anspruch 9, **dadurch gekennzeichnet, daß** sie Vorrichtungen enthält, um in der Etikettenbahn (80) Abschneidebereiche darzustellen, die mindestens einen Teil des Umrisses eines jeden Etikettes abzeichnen.

11. Verfahren zur Herstellung von Behältern (1) und zur Anbringung von mindestens einem Etikett (33) auf mindestens einigen dieser Behälter, bei dem ein Formblock (20) bereitgestellt wird, der mindestens eine Verformungs- und Etikettierreihe (26) aufweist, die über mindestens eine Verformungs- und Etikettierkammer (22) für die Behälter verfügt, und bei dem darüber hinaus so viele Etikettenstreifen (32) transportiert werden, wie die Verformungs- und Etikettierreihe (26) Verformungs- und Etikettierkammern (22) enthält, und bei dem darüber hinaus in jeder Kammer (22) der erwähnten Reihe ein Abschnitt eines entsprechenden Etikettenstreifen abgeschnitten und bereitgestellt wird, und bei dem darüber hinaus ein Behälter (1) in jeder Verformungs- und Etikettierkammer geformt wird,
**dadurch gekennzeichnet, daß** Vorrichtungen bereitgestellt werden, die ziemlich vertikale Wandelemente (36) bilden, die sich jeweils unter einer entsprechenden Kammer (22) der Verformungs- und Etikettierreihe (26) erstrecken, sowie Vorrichtungen, die eine Flügelklappe (38) bilden, die Aufnahmebereiche (40) enthält, die jeweils einer entsprechenden Kammer (22) der Verformungs- und Etikettierreihe zugeordnet sind, sowie **dadurch gekennzeichnet, daß** die Flügelklappe (38) gedreht wird, um in eine erste Position zu gelangen, in der die erwähnten Aufnahmebereiche (40) nach oben zeigen und jeweils vom entsprechenden Wandelement (36) entfernt werden, weiterhin **dadurch gekennzeichnet, daß** ein Endabschnitt eines jeden Etikettenstreifens (32) auf einen entsprechenden Aufnahmebereich (40) gebracht wird, während die Flügelklappe (38) ihre erste Position einnimmt, weiterhin **dadurch gekennzeichnet, daß** dieser Endabschnitt eines jeden Etikettenstreifens abgeschnitten wird, um Etiketten (33) zu bilden, die auf der Wand eines Behälters (1) angebracht werden können und jeweils auf einem Aufnahmebereich (40) der Flügelklappe liegen, die ihre erste Position einnimmt, weiterhin **dadurch gekennzeichnet, daß** die Flügelklappe (38) bei gleichzeitigem Festhalten der Etiketten (33) auf den Aufnahmebereichen (40) gedreht wird, um in eine zweite Position zu gelangen, in der die Aufnahmebereiche (40) gegen die entsprechenden Wandelemente gelegt werden und in der jedes Etikett (33) in einer Aufnahmeposition (54) enthalten ist, die sich zwischen einem Aufnahmebereich (40) und dem entsprechenden Wandelement (36) befindet, weiterhin **dadurch gekennzeichnet, daß** die Etiketten (33) von den Aufnahmepositionen (54) in die entsprechenden Verformungs- und Etikettierkammern (22) transportiert werden, indem jedes Etikett durch einen Verbindungsschlitz (58) geführt wird, der sich im Boden (22B) der entsprechenden Verformungs- und Etikettierkammer über der Aufnahmeposition (54) und ziemlich genau in ihrer vertikalen Verlängerung befindet.

12. Verfahren entsprechend dem Anspruch 11, **dadurch gekennzeichnet, daß** die Behälter (1) durch Warmverformung aus einer Bahn aus thermoplastischem Material (10) hergestellt werden, die schrittweise vorwärts bewegt wird.

13. Verfahren entsprechend dem Anspruch 11 oder 12, bei dem ein Formblock (20) verwendet wird, der vertikal zwischen einer Verformungsposition der Behälter und einer Ausformposition bewegt werden kann, **dadurch gekennzeichnet, daß** die Flügelklappe (38) so betätigt wird, daß sie ihre erste Position einnimmt, wenn der Formblock (20) seine Ausformposition einnimmt, weiterhin **dadurch gekennzeichnet, daß** die Endabschnitte der Etikettenstreifen (32) auf die Aufnahmebereiche (40) der Flügelklappe (38) gebracht werden und diese Abschnitte in einer Lage abgeschnitten werden, in der sich der Formblock (20) in seiner Ausformposition und sich die Flügelklappe (38) in ihrer ersten Position befindet, weiterhin **dadurch gekennzeichnet, daß** der Formblock (20) in seine Verformungsposition bewegt wird und die Flügelklappe (38) so betätigt wird, daß sie ihre zweite Position einnimmt, wenn sich der Formblock (20) in seiner Verformungsposition befindet, und **dadurch gekennzeichnet, daß** die Etiketten (33) in dieser Lage in die entsprechenden Verformungs- und Etikettierkammern (22) transportiert werden.

14. Verfahren entsprechend einem beliebigen der Ansprüche 11 bis 13, **dadurch gekennzeichnet, daß** die Etiketten (33) durch Ansaugen auf den Aufnahmebereichen (40) der Flügelklappe (38) festgehalten werden.

15. Verfahren entsprechend einem beliebigen der Ansprüche 11 bis 14, **dadurch gekennzeichnet, daß** jedes Etikett nach dem Transport der Etiketten (33) in die Verformungskammern (22) durch Ansaugen gegen eine Wand (22A) der entsprechenden Verformungs- und Etikettierkammer gehalten wird.

16. Verfahren entsprechend einem beliebigen der Ansprüche 11 bis 15, **dadurch gekennzeichnet, daß** die Etikettenstreifen (32) dadurch hergestellt werden, daß eine Etikettenbahn (80) in Längsrichtung geschnitten wird.

17. Verfahren entsprechend dem Anspruch 16, **dadurch gekennzeichnet, daß** in der Etikettenbahn (80) Schnitte vorgenommen werden, um jedem Etikett eine bestimmte Form zu verleihen.

18. Verfahren entsprechend einem beliebigen der Ansprüche 11 bis 17, **dadurch gekennzeichnet, daß** die Etiketten (33), nachdem sie zuvor mit einer warmklebenden Substanz auf denjenigen Seiten überzogen worden sind, die dazu bestimmt sind, mit den Wänden der Behälter (1) zusammenzuwirken, mit diesen Behältern unter der Wirkung der Wärme verbunden werden, die der Bahn aus thermoplastischem Material (10) zum Zwecke der Warmverformung der Behälter zugeführt wird.

## Claims

1. Installation for producing containers (1) and for attaching at least one label on at least some of the containers, wherein the installation contains a mould block (20) containing at least one deformation and labelling row (26) which possesses at least one chamber (22) for deforming and labelling containers, devices (34, 44) to transport as many label strips (32) as this deformation and disposing a row (26) contains chambers (22) for moulding and labelling containers, devices for cutting off and attaching a section of each label strip in a corresponding deforming and labelling chamber and devices (14) to mould a container (1) in each deforming chamber (22) in the mould block (20), **characterised in that** the installation contains devices which form more or less vertical wall elements (36), wherein each wall element extends under a corresponding deforming and labelling chamber (22) of the above-mentioned deformation and labelling row (26), and devices which form a wing flap (38) which has as many regions for receiving labels as the deformation and labelling row (26) contains deforming and labelling chambers (22) and which is able to turn between a first position, in which the receiving regions (40) point upwards and are remote from the wall elements (36), and a second position, in which each of said regions (40) is placed against a corresponding wall element (36) and together with the latter forms a receiving position (54) which is able to receive a label (33) for each deforming and labelling chamber (22) of the deformation and labelling row (26), and **characterised in that** the devices for transporting the label strips (32) contain devices to bring an end section of each label strip to the corresponding receiving region (40) in a position in which the wing flap (38) assumes its first position, and **characterised in that** the cutting devices for each label strip contain a cutting tool (42) which is able to form a label (33) which can be attached to the wall of a container (1) **in that** the end section of each label strip (32) is cut off when this end section is lying on a receiving region (40) of the wing flap (38) in its first position, and **characterised in that** the wing flap contains devices (50, 52) to hold the labels (33) in place on the receiving regions (40), and **characterised in that** the base (22B) of each deforming and labelling chamber (22) of the deformation and labelling row (26) possesses a slit (58) connected to the receiving position (54) located between the corresponding wall element (36) and the corresponding receiving region (40) in the second position of the wing flap (38) and which extends over and more or less precisely in the vertical extension of this receiving position (54), and **characterised in that** the installation contains devices to transport each label (33) located in a receiving position (54) into the deforming and labelling chamber (22) to which this receiving position belongs, that is to say above the slit (58) in the base (22B) of this chamber.

2. Installation according to Claim 1, **characterised in that** it contains devices for the stepwise transport of a web of thermoplastic material (10) and devices (12) in order to heat certain regions of this web prior to their arrival in the region of the mould block (20).

3. Installation according to Claim 1 or 2, **characterised in that** the mould block (20) is movable vertically between a deforming position and a shaping position, further **characterised in that** the wall elements (36) and the wing flap (38) are connected to this vertical movement, further **characterised in that** the wing flap (38) is able to assume its first position in the shaping position of the mould block (20) and **characterised in that** the transport devices (34, 44) of the label strips (32) have for each label strip a feed surface (44) which is arranged in such away that it is located beside the free end of the corresponding receiving region (40) of the wing flap (38) when the latter assumes its first position and the mould block (20) assumes its shaping position.

4. Installation according to any of Claims 1 to 3, **characterised in that** the devices for holding the labels (33) in place on the receiving regions (40) of the wing flap contain an air suction system possessing channels (50) which open into each receiving region (40).

5. Installation according to any of Claims 1 to 4, **characterised in that** each deforming and labelling chamber (22) of the deformation and labelling row (26) contains devices to hold a label (33) against a more or less vertical wall (22A) of each of said chambers (22).

6. Installation according to Claim 5, **characterised in that** it contains an air suction system possessing channels which open into each of the deforming and labelling chambers (22) of the deformation and labelling row (26).

7. Installation according to any of Claims 1 to 6, **characterised in that** for every deforming and labelling chamber (22) of the deformation and labelling row (26) it contains two transport fingers (66) which are separated from one another along the length of the slit (58) located in the base (22B) of the chamber in question, wherein each of these fingers is suitable for sliding in a more or less vertical channel (70) which extends from a region of the wall element (36) belonging to the chamber in question and remote from the base of this chamber at least up to the slit (58) arranged in the base of this deforming and labelling chamber (22).

8. Installation according to Claim 7, **characterised in that** it contains devices (69) to control the route of the transport fingers (66) in accordance with the depth of the deforming and labelling chambers (22, 22') of the deformation and labelling row (26).

9. Installation according to any of Claims 1 to 8, **characterised in that** it contains devices (82) to cut a label web (80) in the longitudinal direction in such a way that the label strips (32) are formed on this label web.

10. Installation according to Claim 9, **characterised in that** it contains devices to illustrate in the label web (80) cutting regions which mark out at least a part of the outline of each label.

11. Method for producing containers (1) and for attaching at least one label (33) on at least some of these containers, in which a mould block (20) is provided having at least one deformation and labelling row (26) possessing at least one deforming and labelling chamber (22) for the containers and in which, moreover, as many label strips (32) are transported as the deformation and labelling row (26) contains deforming and labelling chambers (22) and in which, moreover, for each chamber (22) of said row a section of a corresponding label strip is cut off and disposed in the chamber and in which, moreover, a container (1) is moulded in each deforming and labelling chamber, **characterised in that** devices are provided which form more or less vertical wall elements (36) which each extend under a corresponding chamber (22) of the deformation and labelling row (26) and devices which form a wing flap (38) containing receiving regions (40) which are each assigned to a corresponding chamber (22) of the deformation and labelling row, and are **characterised in that** the wing flap (38) is turned to move into a first position in which said receiving regions (40) point upwards and are each removed from the corresponding wall element (36), further **characterised in that** an end section of each label strip (32) is brought onto a corresponding receiving region (40) while the wing flap (38) assumes its first position, further **characterised in that** this end section of each label strip is cut off to form labels (33) which are attached to the wall of a container (1) and each lie on a receiving region (40) of the wing flap in its first position, further **characterised in that** the wing flap (38) is turned while the labels (33) are simultaneously held in place on the receiving regions (40) to come into a second position in which the receiving regions (40) are laid against the corresponding wall elements and in which each label (33) is contained in a receiving position (54) located between a receiving region (40) and the corresponding wall element (36), further **characterised in that** the labels (33) are transported from the receiving positions (54) into the corresponding deforming and labelling chambers (22) **in that** each label is guided through a connecting slit (58) which is located in the base (22B) of the corresponding deforming and labelling chamber above the receiving position (54) and more or less precisely in its vertical extension.

12. Method according to Claim 11, **characterised in that** the containers (1) are produced by thermoforming from a web of thermoplastic material (10) which is moved forward step by step.

13. Method according to Claim 11 or 12, **characterised in that** a mould block (20) is used which can be moved vertically between a deformation position of the containers and a removal position, **characterised in that** the wing flap (38) is operated in such a way that it assumes its first position when the mould block (20) assumes its removal position, further **characterised in that** the end sections of the label strips (32) are brought onto the receiving regions (40) of the wing flap (38) and these sections are cut off in a position in which the mould block (20) is in its removal position and the wing flap (38) is in its first position, further **characterised in that** the mould block (20) is moved into its deformation position and the wing flap (38) is operated in such a way that it assumes its second position when the mould block (20) is in its deformation position, and **characterised in that** the labels (33) in this position are transported into the corresponding deforming and labelling chambers (22).

14. Method according to any of Claims 11 to 13, **characterised in that** the labels (33) are held in place on the receiving regions (40) of the wing flap (38) by suction.

15. Method according to any of Claims 11 to 14, **characterised in that** after transport of the labels (33) into the deforming chambers (22) each label is held by suction against a wall (22A) of the corresponding deforming and labelling chamber.

16. Method according to any of Claims 11 to 15, **characterised in that** the label strips (32) are produced by cutting a label web (80) in the longitudinal direction.

17. Method according to Claim 16, **characterised in that** in the label web (80) cuts are made to give each label a particular shape.

18. Method according to any of Claims 11 to 17, **characterised in that** the labels (33) after they have been previously coated with a hot-bonding substance on those sides destined to engage the walls of the containers (1) are joined to these containers under the action of heat which is supplied to the web of thermoplastic material (10) for the purpose of thermoforming the containers.

## Revendications

1. Dispositif pour fabriquer des récipients (1) et mettre en place au moins une étiquette sur au moins certains de ces récipients, le dispositif comprenant un bloc de moule (20) présentant au moins une rangée de formage et d'étiquetage et d'étiquetage (26) ayant au moins une chambre (22) de formage et d'étiquetage de récipients, des moyens (34, 44) pour convoyer autant de bandelettes d'étiquettes (32) que ladite rangée de formage et d'étiquetage (26) comporte de chambres (22) de formage et d'étiquetage de récipients, des moyens de découpe et de mise en place dans une chambre de formage et d'étiquetage correspondante d'une portion de chaque bandelette d'étiquettes et des moyens (14) pour former un récipient (1) dans chaque chambre de formage (22) du bloc de moule (20),
**caractérisé en ce qu'**il comporte des moyens formant des éléments de paroi sensiblement verticaux (36), chaque élément de paroi s'étendant sous une chambre de formage et d'étiquetage (22) correspondante de ladite rangée de formage et d'étiquetage (26), et des moyens formant un volet (38) qui présente autant de zones (40) de réception d'étiquettes que la rangée de formage et d'étiquetage (26) comporte de chambres de formage et d'étiquetage (22) et qui est apte à pivoter entre une première position dans laquelle les zones de réception (40) sont tournées vers le haut et sont écartées des éléments de paroi (38) et une deuxième position dans laquelle chacune desdites zones (40) est rabattue contre un élément de paroi (36) correspondant et délimite avec ce dernier un logement (54) apte à contenir une étiquette (33) pour chaque chambre de formage et d'étiquetage (22) de la rangée de formage et d'étiquetage (26), **en ce que** les moyens pour convoyer les bandelettes d'étiquettes (32) comprennent des moyens pour amener une portion d'extrémité de chaque bandelette d'étiquettes sur la zone de réception (40) correspondante dans une situation dans laquelle le volet (38) occupe sa première position, **en ce que** les moyens de découpe comprennent, pour chaque bandelette, un organe de découpe (42) apte à former une étiquette (33) susceptible d'être fixée à la paroi d'un récipient (1) en coupant la portion d'extrémité de chaque bandelette d'étiquettes (32) lorsque cette portion d'extrémité repose sur une zone de réception (40) du volet (38) occupant sa première position, **en ce que** le volet comporte des moyens (50, 52) pour maintenir les étiquettes (33) sur les zones de réception (40), **en ce que** le fond (22B) de chaque chambre de formage et d'étiquetage (22) de la rangée de formage et d'étiquetage (26) présente une fente (58) qui communique avec le logement (54) ménagé entre l'élément de paroi correspondant (36) et la zone de réception correspondante (40) dans la deuxième position du volet (38) et qui s'étend au-dessus et sensiblement dans le prolongement vertical dudit logement (54) et **en ce que** le dispositif comporte des moyens pour transférer chaque étiquette (33) contenue dans un logement (54) dans la chambre de formage et d'étiquetage (22) correspondant à ce logement, à travers la fente (58) du fond (22B) de ladite chambre.

2. Dispositif selon la revendication 1, **caractérisé en ce qu'**il comporte des moyens pour entraîner pas à pas une bande de matériau thermoplastique (10) et des moyens (12) pour chauffer des zones déterminées de ladite bande avant leur arrivée dans la région du bloc de moule (20).

3. Dispositif selon la revendication 1 ou 2, **caractérisé en ce que** le bloc de moule (20) est verticalement mobile entre une position de formage et une position de démoulage, **en ce que** les éléments de paroi (36) et le volet (38) sont solidaires de ce déplacement vertical, **en ce que** le volet (38) est susceptible d'occuper sa première position dans la position de démoulage du bloc de moule (20) et **en ce que** les moyens de convoyage (34, 44) des bandelettes d'étiquettes (32) présentent, pour chaque bandelette d'étiquettes, une surface d'amenée (44) disposée de manière à se trouver au voisinage de l'extrémité libre de la zone de réception (40) correspondante du volet (38) lorsque ce dernier occupe sa première position et que le bloc de moule (20) occupe sa position de démoulage.

4. Dispositif selon l'une quelconque des revendications 1 à 3, **caractérisé en ce que** les moyens pour maintenir les étiquettes (33) sur les zones de réception (40) du volet comprennent un système d'aspiration d'air ayant des canaux (50) qui débouchent dans chaque zone de réception (40).

5. Dispositif selon l'une quelconque des revendications 1 à 4, **caractérisé en ce que** chaque chambre de formage et d'étiquetage (22) de la rangée de formage et d'étiquetage (26) comporte des moyens pour maintenir une étiquette (33) contre une paroi sensiblement verticale (22A) de chacune desdites chambres (22).

6. Dispositif selon la revendication 5, **caractérisé en ce qu'**il comporte un système d'aspiration d'air ayant des canaux qui débouchent dans chacune des chambres de formage et d'étiquetage (22) de la rangée de formage et d'étiquetage (26).

7. Dispositif selon l'une quelconque des revendications 1 à 6, **caractérisé en ce que**, pour chaque chambre de formage et d'étiquetage (22) de la rangée de formage et d'étiquetage (26), il comporte deux doigts de transfert (66) espacés l'un de l'autre selon la longueur de la fente (58) que présente le fond (22B) de la chambre considérée, chacun de ces doigts étant susceptible de coulisser dans un canal (70) sensiblement vertical qui s'étend, depuis une région de l'élément de paroi (36) correspondant à la chambre considérée qui est éloignée du fond de cette chambre, au moins jusqu'à la fente (58) ménagée dans le fond de cette chambre de formage et d'étiquetage (22).

8. Dispositif selon la revendication 7, **caractérisé en ce qu'**il comporte des moyens (69') pour régler la course des doigts de transfert (66) en fonction de la profondeur des chambres de formage et d'étiquetage (22, 22') de la rangée de formage et d'étiquetage (26).

9. Dispositif selon l'une quelconque des revendications 1 à 8, **caractérisé en ce qu'**il comporte des moyens (82) pour découper longitudinalement une bande à étiquettes (80) de manière à former les bandelettes d'étiquettes (32) à partir de cette dernière.

10. Dispositif selon la revendication 9, **caractérisé en ce qu'**il comporte des moyens pour former, dans la bande à étiquettes (80), des découpes délimitant au moins en partie le contour de chaque étiquette.

11. Procédé pour fabriquer des récipients (1) et mettre en place au moins une étiquette (33) sur au moins certains de ces récipients, dans lequel on fournit un bloc de moule (20) présentant au moins une rangée de formage et d'étiquetage (26) ayant au moins une chambre (22) de formage et d'étiquetage de récipients, on convoie autant de bandelettes d'étiquettes (32) que la rangée de formage et d'étiquetage (26) comporte de chambres de formage et d'étiquetage (22), on découpe et on met en place dans chaque chambre (22) de ladite rangée une portion d'une bandelette d'étiquettes correspondante, et on forme un récipient (1) dans chaque chambre de formage et d'étiquetage,
**caractérisé en ce que** l'on fournit des moyens formant des éléments de paroi (36) sensiblement verticaux s'étendant, chacun, sous une chambre (22) correspondante de la rangée de formage et d'étiquetage (26) et des moyens formant un volet (38) qui présente des zones de réception (40) associées, chacune, à une chambre correspondante (22) de la rangée de formage et d'étiquetage, **en ce que** l'on fait pivoter le volet (38) pour l'amener dans une première position dans laquelle lesdites zones de réception (40) sont tournées vers le haut et écartées, chacune, de l'élément de paroi (36) correspondant, on amène une portion d'extrémité de chaque bandelette d'étiquettes (32) sur une zone de réception (40) correspondante alors que le volet (38) occupe sa première position, **en ce que** l'on coupe ladite portion d'extrémité de chaque bandelette pour former des étiquettes (33) aptes à être fixées sur la paroi d'un récipient (1) et reposant, chacune, sur une zone de réception (40) du volet occupant sa première position, **en ce que**, tout en maintenant les étiquettes (33) sur les zones de réception (40), on fait pivoter le volet (38) pour l'amener dans une deuxième position dans laquelle les zones de réception (40) sont rabattues contre les éléments de paroi (36) correspondants et dans laquelle chaque étiquette (33) est contenue dans un logement (54) ménagé entre une zone de réception (40) et l'élément de paroi (36) correspondant, **en ce que** l'on transfère les étiquettes (33) depuis les logements (54) dans les chambres de formage et d'étiquetage (22) correspondantes en faisant passer chaque étiquette à travers une fente (58) de communication qui est ménagée dans le fond (22B) de la chambre de formage et d'étiquetage correspondante, au-dessus du logement (54) et sensiblement dans le prolongement vertical de ce dernier.

12. Procédé selon la revendication 11, **caractérisé en ce que** l'on réalise les récipients (1) par thermoformage à partir d'une bande de matériau thermoplastique (10) entraînée pas à pas.

13. Procédé selon la revendication 11 ou 12, dans lequel on utilise un bloc de moule (20) susceptible d'être déplacé verticalement entre une position de formage des récipients et une position de démoulage, **caractérisé en ce que** l'on actionne le volet (38) de telle sorte qu'il occupe sa première position lorsque le bloc de moule (20) occupe sa position de démoulage, **en ce que** l'on amène les portions d'extrémité des bandes d'étiquettes (32) sur les zones de réception (40) du volet (38) et l'on coupe lesdites portions dans cette situation dans laquelle le bloc de moule (20) est dans sa position de démoulage et le volet (38) est dans sa première position, **en ce que** l'on déplace le bloc de moule (20) dans sa position de formage et l'on actionne le volet (38) de telle sorte qu'il occupe sa deuxième position lorsque le bloc de moule (20) est dans sa position de formage et **en ce que**, dans cette situation, on transfère les étiquettes (33) dans les chambres de formage et d'étiquetage (22) correspondantes.

14. Procédé selon l'une quelconque des revendications 11 à 13, **caractérisé en ce que** l'on maintient les étiquettes (33) sur les zones de réception (40) du volet (38) par aspiration.

15. Procédé selon l'une quelconque des revendications 11 à 14, **caractérisé en ce que**, après le transfert des étiquettes (33) dans les chambres de formage (22), on maintient chaque étiquette contre une paroi (22A) de la chambre de formage et d'étiquetage correspondante par aspiration.

16. Procédé selon l'une quelconque des revendications 11 à 15, **caractérisé en ce que** l'on réalise les bandelettes d'étiquettes (32) en découpant longitudinalement une bande à étiquettes (80).

17. Procédé selon la revendication 16, **caractérisé en ce que** l'on réalise des découpes dans la bande à étiquettes (80) afin de donner une forme déterminée à chaque étiquette.

18. Procédé selon l'une quelconque des revendications 11 à 17, **caractérisé en ce que**, les étiquettes (33) étant préalablement enduites d'une substance thermocollante sur leurs faces destinées à coopérer avec les parois des récipients (1), on solidarise les étiquettes avec les récipients sous l'effet de la chaleur donnée à la bande de matériau thermoplastique (10) pour le thermoformage des récipients.
